(19)
Europäisches
Patentamt

European
Patent Office

Office européen
des brevets

(11) **EP 4 299 603 A1**

(12) **EUROPEAN PATENT APPLICATION**
published in accordance with Art. 153(4) EPC

(43) Date of publication:
**03.01.2024 Bulletin 2024/01**

(21) Application number: **22759264.9**

(22) Date of filing: **31.01.2022**

(51) International Patent Classification (IPC):
**C08F 8/00** $^{(2006.01)}$　　　**C08F 214/26** $^{(2006.01)}$
**H01B 7/02** $^{(2006.01)}$

(52) Cooperative Patent Classification (CPC):
**C08F 8/00; C08F 214/26; H01B 7/02**

(86) International application number:
**PCT/JP2022/003637**

(87) International publication number:
**WO 2022/181223 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2021　JP 2021031089
30.09.2021　JP 2021162116**

(71) Applicant: **Daikin Industries, Ltd.
Osaka-shi, Osaka 530-0001 (JP)**

(72) Inventors:
• **ISAKA, Tadaharu
Osaka-shi, Osaka 530-0001 (JP)**
• **ZENKE, Yumi
Osaka-shi, Osaka 530-0001 (JP)**
• **YAMAMOTO, Yukari
Osaka-shi, Osaka 530-0001 (JP)**
• **TSUDA, Hayato
Osaka-shi, Osaka 530-0001 (JP)**
• **SEKIGUCHI, Takashi
Osaka-shi, Osaka 530-0001 (JP)**

(74) Representative: **Hoffmann Eitle
Patent- und Rechtsanwälte PartmbB
Arabellastraße 30
81925 München (DE)**

(54) **COPOLYMER, MOLDED BODY, INJECTION MOLDED BODY, AND COATED ELECTRICAL WIRE**

(57) There is provided a copolymer containing tetrafluoroethylene unit and perfluoro(propyl vinyl ether) unit, wherein the copolymer has a content of perfluoro(propyl vinyl ether) unit of 2.51 to 2.92 mol% with respect to the whole of the monomer units, a melt flow rate at 372°C of 19.0 to 33.0 g/10 min, and the number of functional groups of 50 or less per $10^6$ main-chain carbon atoms.

**EP 4 299 603 A1**

**Description**

TECHNICAL FIELD

The present disclosure relates to a copolymer, a formed article, an injection molded article, and a coated electric wire.

BACKGROUND ART

Patent Document 1 describes that, as a coating material for a coated electric wire, a coating material of a tetrafluoroethylene [TFE]-based copolymer, wherein the TFE-based copolymer has TFE unit derived from TFE and perfluoro(alkyl vinyl ether) [PAVE] unit derived from PAVE, contains more than 5% by mass and 20% by mass or less PAVE unit with respect to the whole of the monomer units, contains less than 10 unstable terminal groups per $1\times10^6$ carbon atoms, and has a melting point of 260°C or higher.

RELATED ART

PATENT DOCUMENTS

Patent Document 1: Japanese Patent Laid-Open No. 2009-59690

SUMMARY OF THE INVENTION

PROBLEM TO BE SOLVED BY THE INVENTION

An object of the present disclosure is to provide a copolymer that is capable of providing a thin visually attractive molded article by being molded by injection molding at an extremely high injection rate, that hardly corrodes a metal mold to be used for molding and a core wire coated therewith, that is capable of forming at a high rate a thin coating layer on a core wire having a small diameter by extrusion forming, and that is capable of providing a formed article which has a small haze value, which has excellent 90°C abrasion resistance, air low permeability, chemical solution low permeability, and 100°C mechanical strength, which also has sufficient water vapor low permeability, and which hardly makes fluorine ions to dissolve out in an electrolytic solution.

MEANS FOR SOLVING THE PROBLEM

According to the present disclosure, there is provided a copolymer containing tetrafluoroethylene unit and perfluoro(propyl vinyl ether) unit, wherein the copolymer has a content of perfluoro(propyl vinyl ether) unit of 2.51 to 2.92 mol% with respect to the whole of the monomer units, a melt flow rate at 372°C of 19.0 to 33.0 g/10 min, and the number of functional groups of 50 or less per $10^6$ main-chain carbon atoms.

The copolymer of the present disclosure preferably has a melt flow rate at 372°C of 20.0 to 30.0 g/10 min.

According to the present disclosure, an injection molded article comprising the above copolymer is further provided.

According to the present disclosure, a coated electric wire having a coating layer comprising the above copolymer is further provided.

According to the present disclosure, a formed article comprising the above copolymer, wherein the formed article is a joint, a flow meter body, or an electric wire coating is further provided.

EFFECTS OF INVENTION

The present disclosure can provide a copolymer that is capable of providing a thin visually attractive molded article by being molded by injection molding at an extremely high injection rate, that hardly corrodes a metal mold to be used for molding and a core wire coated therewith, that is capable of forming at a high rate a thin coating layer on a core wire having a small diameter by extrusion forming, and that is capable of providing a formed article which has a small haze value, which has excellent 90°C abrasion resistance, air low permeability, chemical solution low permeability, and 100°C mechanical strength, which also has sufficient water vapor low permeability, and which hardly makes fluorine ions to dissolve out in an electrolytic solution.

DESCRIPTION OF EMBODIMENTS

Hereinafter, specific embodiments of the present disclosure will be described in detail, but the present disclosure is not limited to the following embodiments.

A copolymer of the present disclosure contains tetrafluoroethylene (TFE) unit and perfluoro(propyl vinyl ether) (PPVE) unit.

The copolymer (PFA) containing the TFE unit and the PPVE unit is used as a material for forming formed articles such as a flowmeter member for measuring the flow rate of a chemical solution and a piping member for transferring a chemical solution. To enable the flow rate to be reliably measured, the flowmeter member is required to have transparency. A transparent piping member enables the state of transferring a chemical solution to be checked. Also, the pressure of a fluid traveling in a flowmeter and a piping frequently varies, for example, when the feeding of the fluid is started, when the feeding of the fluid is stopped, and when the feeding pressure of the fluid is changed. When circulating a high-pressure fluid or a high-temperature fluid, the high-pressure fluid or the high-temperature fluid travels through the flowmeter or the piping. Accordingly, as a material for constituting such formed articles, a material having a small haze value and excellent high-temperature abrasion resistance, chemical solution low permeability, and high-temperature mechanical strength is required. Also, a material that has sufficient water vapor low permeability and that has suppressed fluorine ions dissolving out from the material itself needs to be used so as not to contaminate the chemical solution flowing in the piping member and the flowmeter member with water or fluoride ions. Moreover, since some of such piping members and flowmeter members have a thin portion, the copolymer is required to be capable of providing a visually attractive formed article having a thin portion.

Patent Document 1 describes that in the tetrafluoroethylene [TFE]-based copolymer having TFE unit derived from TFE and perfluoro(alkyl vinyl ether) [PAVE] unit derived from PAVE, the PAVE unit exceeding 5% by mass with respect to the whole of the monomer units as enhancing melt fabricability and improving crack resistance. However, a copolymer is not known that is capable of providing a formed article having a small haze value, having excellent high-temperature abrasion resistance, air low permeability, chemical solution low permeability and high-temperature mechanical strength, and having sufficient water vapor low permeability, and that is capable of providing a thin visually attractive molded article by being molded by injection molding at an extremely high injection rate.

It has been found that by suitably regulating the content of the PPVE unit, the melt flow rate (MFR), and the number of functional groups of the copolymer containing the TFE unit and the PPVE unit, the moldability of the copolymer is significantly improved and, at the same time, a metal mold to be used for molding is hardly corroded. Besides, it has been also found that by using such a copolymer, a formed article is obtained that has a small haze value, that has excellent 90°C abrasion resistance, air low permeability, chemical solution low permeability and 100°C mechanical strength, that also has sufficient water vapor low permeability, and that hardly makes fluorine ions to dissolve out in an electrolytic solution.

Moreover, by forming the copolymer of the present disclosure by extrusion forming, a thin coating layer can be formed by extrusion forming at a high rate on a core wire having a small diameter. In addition, the obtained coating layer hardly corrodes the core wire. Thus, the copolymer of the present disclosure can be utilized not only as a material for a piping member and a flowmeter member, but also in a broad range of applications such as electric wire coating.

The copolymer of the present disclosure is a melt-fabricable fluororesin. Being melt-fabricable means that a polymer can be melted and processed by using a conventional processing device such as an extruder or an injection molding machine.

The content of the PPVE unit of the copolymer is 2.51 to 2.92 mol% with respect to the whole of the monomer units, preferably 2.54 mol% or higher, more preferably 2.57 mol% or higher, still more preferably 2.59 mol% or higher, especially preferably 2.62 mol% or higher, and most preferably 2.65 mol% or higher, and preferably 2.90 mol% or lower, and especially preferably 2.87 mol% or lower. An excessively small content of the PPVE unit of the copolymer results in an increased haze value, and poor 90°C abrasion resistance and 100°C mechanical strength. An excessively large content of the PPVE unit of the copolymer fails to provide a formed article having sufficient water vapor low permeability cannot be obtained.

The content of the TFE unit of the copolymer is preferably 97.08 to 97.49 mol% with respect to the whole of the monomer units, more preferably 97.10 mol% or higher, and most preferably 97.13 mol% or higher, and more preferably 97.46 mol% or lower, still more preferably 97.43 mol% or lower, further still more preferably 97.41 mol% or lower, especially preferably 97.38 mol% or lower, and most preferably 97.35 mol% or lower. An excessively large content of the TFE unit of the copolymer possibly results in an increased haze value, and poor 90°C abrasion resistance and 100°C mechanical strength. An excessively small content of the TFE unit of the copolymer possibly fails to provide a formed article having sufficient water vapor low permeability cannot possibly be obtained.

In the present disclosure, the content of each monomer unit in the copolymer is measured by a $^{19}$F-NMR method.

The copolymer can also contain a monomer unit derived from a monomer copolymerizable with TFE and PPVE. In this case, the content of the monomer unit copolymerizable with TFE and PPVE is, with respect to the whole of the monomer units of the copolymer, preferably 0 to 0.43 mol%, more preferably 0.01 to 0.30 mol%, and still more preferably 0.05 to 0.20 mol%.

The monomers copolymerizable with TFE and PPVE may include hexafluoropropylene (HFP), vinyl monomers represented by $CZ^1Z^2=CZ^3 (CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] represented by $CF_2=CF-ORf^1$ wherein $Rf^1$ is a perfluoroalkyl group having 1 to 8 carbon atoms (excluding PPVE), and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and TFE/HFP/PPVE copolymer, and is more preferably a copolymer consisting only of the TFE unit and the PPVE unit.

The melt flow rate (MFR) of the copolymer is 19.0 to 33.0 g/10 min. The MFR of the copolymer is preferably 20.0 g/10 min or higher, more preferably 21.0 g/10 min or higher, still more preferably 22.0 g/10 min or higher, especially preferably 23.0 g/10 min or higher, and most preferably 24.0 g/10 min or higher, and preferably 32.9 g/10 min or lower, more preferably 32.0 g/10 min or lower, still more preferably 31.0 g/10 min or lower, and especially preferably 30.0 g/10 min or lower. Due to that the MFR of the copolymer is in the above range, the moldability of the copolymer is improved, and also a formed article can be obtained that has a small haze value, that has excellent 90°C abrasion resistance and 100°C mechanical strength, and that has sufficient water vapor low permeability.

In the present disclosure, the MFR is a value obtained as a mass (g/10 min) of the polymer flowing out from a nozzle having an inner diameter of 2.1 mm and a length of 8 mm per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

In the present disclosure, the number of functional groups per $10^6$ main-chain carbon atoms of the copolymer is 50 or less. The number of functional groups per $10^6$ main-chain carbon atoms of the copolymer is preferably 40 or less, more preferably 30 or less, still more preferably 20 or less, further still more preferably 15 or less, especially preferably 10 or less and most preferably less than 6. Due to that the number of functional groups of the copolymer is in the above range, a metal mold is hardly corroded during molding using the metal mold, and a core wire is hardly corroded when the copolymer is used as an electric wire coating. Also, due to that the number of functional groups of the copolymer is in the above range, a formed article can be obtained that hardly permeates a chemical solution such as an electrolytic solution, that has excellent air low permeability (gas barrier property), and that hardly makes fluorine ions to dissolve out in an electrolytic solution. In addition, due to that the number of functional groups of the copolymer is in the above range, a thin coating layer can be formed by extrusion forming at a high rate on a core wire having a small diameter.

For identification of the kind of the functional groups and measurement of the number of the functional groups, infrared spectroscopy can be used.

The number of the functional groups is measured, specifically, by the following method. First, the copolymer is formed by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of the functional group per $1\times10^6$ carbon atoms in the copolymer is calculated according to the following formula (A).

$$N = I \times K/t \cdots (A)$$

I:  absorbance
K:  correction factor
t:  thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

Table 1

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of -CH$_2$CF$_2$H, -CH$_2$COF, -CH$_2$COOH, -CH$_2$COOCH$_3$ and -CH$_2$CONH$_2$ are lower by a few tens of kaysers (cm$^{-1}$) than those of -CF$_2$H, -COF, -COOH free and -COOH bonded, -COOCH$_3$ and -CONH$_2$ shown in the Table, respectively.

For example, the number of the functional group -COF is the total of the number of a functional group determined from an absorption peak having an absorption frequency of 1,883 cm$^{-1}$ derived from -CF$_2$COF and the number of a functional group determined from an absorption peak having an absorption frequency of 1,840 cm$^{-1}$ derived from -CH$_2$COF.

The functional groups are ones present on main chain terminals or side chain terminals of the copolymer, and ones present in the main chain or the side chains. The number of the functional groups may be the total of numbers of -CF=CF$_2$, -CF$_2$H, -COF, -COOH, -COOCH$_3$, -CONH$_2$ and -CH$_2$OH.

The functional groups are introduced to the copolymer by, for example, a chain transfer agent or a polymerization initiator used for production of the copolymer. For example, in the case of using an alcohol as the chain transfer agent, or a peroxide having a structure of -CH$_2$OH as the polymerization initiator, -CH$_2$OH is introduced on the main chain terminals of the copolymer. Alternatively, the functional group is introduced on the side chain terminal of the copolymer by polymerizing a monomer having the functional group.

By subjecting the copolymer having such a functional group to a fluorination treatment, a copolymer having the number of functional groups within the above range can be obtained. That is, the copolymer of the present disclosure is preferably one which is subjected to the fluorination treatment. Further, the copolymer of the present disclosure preferably has -CF$_3$ terminal groups.

The melting point of the copolymer is preferably 285 to 310°C, more preferably 290°C or higher, and still more preferably 294°C or higher, and is more preferably 303°C or lower. Due to that the melting point is in the above range, the copolymer giving formed articles better in mechanical strength particularly at high temperatures can be obtained.

In the present disclosure, the melting point can be measured by using a differential scanning calorimeter [DSC].

The copolymer of the present disclosure preferably has a haze value of 12% or less, more preferably 10% or less, and still more preferably 9% or less. Due to that the haze value is in the above range, when the copolymer of the present disclosure is used to obtain a formed article such as a piping, a joint, a flowmeter body, or a bottle, it is easy to observe the inside of the formed article by visual observation, a camera or the like, and thus it is easy to check the flow rate and the residual quantity of the contents. The haze value can be lowered by regulating the content of the PPVE unit and the melt flow rate (MFR) of the copolymer. In the present disclosure, the haze value can be measured according to JIS K 7136.

The copolymer of the present disclosure preferably has a tensile strength at 100°C of 18.0 MPa or higher, and more preferably 18.5 MPa or higher. Due to that the tensile strength at 100°C is in the above range, even when the obtained formed article is used at high temperatures, deformation is suppressed, and the service life of the formed article can be extended. The tensile strength at 100°C can be raised by regulating the content of the PPVE unit and the melt flow rate (MFR) of the copolymer. In the present disclosure, the tensile strength at 100°C can be measured according to ASTM D638.

The water vapor permeability of the copolymer is preferably 14.5 g·cm/m$^2$ or lower, and more preferably 14.2 g·cm/m$^2$ or lower. Due to that the content of the PPVE unit, the melt flow rate (MFR), and the number of functional groups of the copolymer containing the TFE unit and the PPVE unit are suitably regulated, the copolymer of the present disclosure has sufficient water vapor low permeability. Accordingly, for example, a piping member and a flowmeter member obtained using the copolymer of the present disclosure can be suitably used to transfer a chemical solution that should not be mixed with water such as water vapor in outside air.

In the present disclosure, the water vapor permeability can be measured under the condition of a temperature of 95°C and for 30 days. Specific measurement of the water vapor permeability can be carried out by a method described in the Examples.

The air permeability coefficient of the copolymer is preferably 500 $cm^3 \cdot mm/$ ($m^2 \cdot 24$ h·atm) or less. Due to that the content of the PPVE unit, the melt flow rate (MFR), and the number of functional groups of the copolymer containing the TFE unit and the PPVE unit are suitably regulated, the copolymer of the present disclosure has excellent air low permeability.

In the present disclosure, the air permeability coefficient can be measured under the condition of a test temperature of 70°C and a test humidity of 0% RH. Specific measurement of the air permeability coefficient can be carried out by a method described in the Examples.

The electrolytic solution permeability of the copolymer is preferably 7.5 $g \cdot cm/m^2$ or lower, and more preferably 7.3 $g \cdot cm/m^2$ or lower. Due to that the content of PPVE unit, the melt flow rate (MFR), and the number of functional groups of the copolymer containing the TFE unit and the PPVE unit are suitably regulated, the copolymer of the present disclosure has excellent electrolytic solution low permeability. That is, by using the copolymer of the present disclosure, a formed article that hardly makes a chemical solution such as an electrolytic solution to permeate can be obtained and, therefore, for example, a piping member and a flow meter member obtained with the copolymer of the present disclosure can suitably be used to transfer a chemical solution such as an electrolytic solution.

In the present disclosure, the electrolytic solution permeability can be measured under the condition of a temperature of 60°C and for 30 days. Specific measurement of the electrolytic solution permeability can be carried out by a method described in the Examples.

In the copolymer of the present disclosure, the amount of fluorine ions dissolving out therefrom detected by an electrolytic solution immersion test is, in terms of mass, preferably 1.0 ppm or lower, more preferably 0.8 ppm or lower, and still more preferably 0.7 ppm or lower. Due to that the amount of fluorine ions dissolving out is in the above range, the generation of gases such as HF in a non-aqueous electrolyte battery can be more suppressed, and the deterioration and the shortening of the service life of the battery performance of a non-aqueous electrolyte battery can be more suppressed.

In the present disclosure, the electrolytic solution immersion test can be carried out by preparing a test piece of the copolymer having a weight corresponding to that of 10 sheets of formed articles (15 mm × 15 mm × 0.2 mm) of the copolymer, and putting, in a thermostatic chamber at 80°C, a glass-made sample bottle in which the test piece and 2 g of dimethyl carbonate (DMC) have been charged and allowing the resultant to stand for 144 hours.

The copolymer of the present disclosure can be produced by a polymerization method such as suspension polymerization, solution polymerization, emulsion polymerization or bulk polymerization. The polymerization method is preferably emulsion polymerization or suspension polymerization. In these polymerization methods, conditions such as temperature and pressure, and a polymerization initiator and other additives can be suitably set depending on the formulation and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

   dialkyl peroxycarbonates such as di-n-propyl peroxydicarbonate, diisopropyl peroxydicarbonate, di-sec-butyl peroxydicarbonate and di-2-ethoxyethyl peroxydicarbonate;
   peroxyesters such as t-butyl peroxyisobutyrate and t-butyl peroxypivalate;
   dialkyl peroxides such as di-t-butyl peroxide; and
   di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an ω-hydroperfluoroalkyl group, or a fluorochloroalkyl group.

Examples of the di[fluoro(or fluorochloro)acyl] peroxides include di(ω)-hydro-dodecafluorohexanoyl) peroxide, di(ω)-hydro-tetradecafluoroheptanoyl) peroxide, di(ω-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω)-chloro-hexafluorobutyryl) peroxide, di(ω-chloro-decafluorohexanoyl) peroxide, di(ω-chloro-tetradecafluorooctanoyl) peroxide, ω-hydrododecafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide and di(undecachlorotriacontafluorodocosanoyl) peroxide.

The water-soluble radical polymerization initiator may be a known water-soluble peroxide, and examples include ammonium salts, potassium salts and sodium salts of persulfuric acid, perboric acid, perchloric acid, perphosphoric acid, percarbonic acid and the like, organic peroxides such as disuccinoyl peroxide and diglutaroyl peroxide, and t-butyl permaleate and t-butyl hydroperoxide. A reductant such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, for example, nonionic surfactants, anionic surfactants and cationic surfactants may be used. Among these, fluorine-containing anionic surfactants are preferred, and more preferred are linear or branched fluorine-containing anionic surfactants having 4 to 20 carbon atoms, which may contain an ether bond oxygen (that is, an oxygen atom may be inserted between carbon atoms). The amount of the surfactant to be added (with respect to water in the polymerization) is preferably 50 to 5,000 ppm.

Examples of the chain transfer agent include hydrocarbons such as ethane, isopentane, n-hexane, and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride and methyl chloride. The amount of the chain transfer agent to be added may vary depending on the chain transfer constant of the compound to be used, but is usually in the range of 0.01 to 20% by mass with respect to the solvent in the polymerization.

The solvent may include water and mixed solvents of water and an alcohol.

In the suspension polymerization, in addition to water, a fluorinated solvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroalaknes such as $CF_2ClCFClCF_2CF_3$ and $CF_3CFClCFClCF_3$; hydrofluroalkanes such as $CF_3CFHCFHCF_2CF_2CF_3$, $CF_2HCF_2CF_2CF_2H$ and $CF_3CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$ and $CF_3CHFCF_2OCH_2CF_3$; and perfluoroalkanes such as perfluorocyclobutane, $CF_3CF_2CF_2CF_3$, $CF_3CF_2CF_2CF_2CF_3$ and $CF_3CF_2CF_2CF_2CF_2CF_3$, and among these, perfluoroalkanes are preferred. The amount of the fluorinated solvent to be used is, from the viewpoint of suspensibility and economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, washing, and drying the copolymer contained in the aqueous dispersion. Then in the case of obtaining the copolymer as a slurry by the polymerization reaction, the copolymer can be recovered by taking out the slurry from a reaction container, and washing and drying the slurry. The copolymer can be recovered in a shape of powder by the drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder or a tandem extruder and cutting the resultant into a predetermined length to form the copolymer into pellets. The extrusion temperature in the melt extrusion needs to be varied depending on the melt viscosity and the production method of the copolymer, and is preferably the melting point of the copolymer + 20°C to the melting point of the copolymer + 140°C. A method of cutting the copolymer is not limited, and a conventionally known method can be adopted such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water at 30 to 200°C, steam at 100 to 200°C or hot air at 40 to 200°C.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as -COOH, -COOCH$_3$, -CH$_2$OH, -COF, -CF=CF$_2$ and -CONH$_2$, and thermally relatively stable functional groups thereof, such as -CF$_2$H, can be converted to thermally very stable -CF$_3$. Consequently, the total number (number of functional groups) of -COOH, -COOCH$_3$, -CH$_2$OH, -COF, -CF=CF$_2$, - CONH$_2$ and -CF$_2$H of the copolymer can easily be controlled in the above-mentioned range.

The fluorine-containing compound is not limited, but includes fluorine radical sources generating fluorine radicals under the fluorination treatment condition. The fluorine radical sources include $F_2$ gas, $CoF_3$, $AgF_2$, $UF_6$, $OF_2$, $N_2F_2$, $CF_3OF$, halogen fluorides (for example, $IF_5$ and $ClF_3$).

The fluorine radical source such as $F_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas includes nitrogen gas, helium gas and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the copolymer, preferably at 20 to 240°C and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas ($F_2$ gas).

A composition may be obtained by mixing the copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

As the above-mentioned other components, other polymers other than the copolymer may be used. The other polymers include fluororesins other than the copolymer, fluoroelastomer, and non-fluorinated polymers.

A method of producing the composition includes a method of dry mixing the copolymer and the other components, and a method of previously mixing the copolymer and the other components by a mixer and then melt kneading the mixture by a kneader, melt extruder or the like.

The copolymer of the present disclosure or the above-mentioned composition can be used as a processing aid, a forming material and the like, and is suitably used as a forming material. There can also be utilized aqueous dispersions, solutions and suspensions of the copolymer of the present disclosure, and the copolymer/solvent-based materials; and these can be used for application of coating materials, encapsulation, impregnation, and casting of films. However, since the copolymer of the present disclosure has the above-mentioned properties, it is preferable to use the copolymer as the forming material.

Formed articles may be obtained by forming the copolymer of the present disclosure or the above composition.

A method of forming the copolymer or the composition is not limited, and includes injection molding, extrusion forming, compression molding, blow molding, transfer molding, rotomolding and rotolining molding. As the forming method, among these, preferable are extrusion forming, compression molding, injection molding and transfer molding; more preferable are injection molding, extrusion forming and transfer molding from the viewpoint of being able to produce forming articles in a high productivity, and still more preferable is injection molding. That is, it is preferable that formed articles are extrusion formed articles, compression molded articles, injection molded articles or transfer molded articles; and from the viewpoint of being able to produce molded articles in a high productivity, being injection molded articles, extrusion formed articles or transfer molded articles is more preferable, and being injection molded articles is still more preferable. By forming the copolymer of the present disclosure by injection molding, a thin visually attractive formed article can be obtained by forming it at an extremely high injection rate.

The formed articles containing the copolymer of the present disclosure may be, for example, a nut, a bolt, a joint, a film, a bottle, a gasket, an electric wire coating, a tube, a hose, a pipe, a valve, a sheet, a seal, a packing, a tank, a roller, a container, a cock, a connector, a filter housing, a filter cage, a flow meter, a pump, a wafer carrier, and a wafer box.

The copolymer of the present disclosure, the above composition and the above formed articles can be used, for example, in the following applications.

Food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes;

inner surface lining materials of chemical solution tanks and piping of chemical plants and semiconductor factories;

members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks;

members for food and beverage transfer, such as tubes, hoses, belts, packings and joints for food and beverage, food packaging materials, and members for glass cooking appliances;

members for waste liquid transport, such as tubes and hoses for waste transport;

members for high-temperature liquid transport, such as tubes and hoses for high-temperature liquid transport;

members for steam piping, such as tubes and hoses for steam piping;

corrosionproof tapes for piping, such as tapes wound on piping of decks and the like of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for various kinds of roof materials, sidewalls and the like;

interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses and evap hoses. The above fuel transfer members can also be used as fuel transfer members for gasoline additive-containing fuels, resultant to sour gasoline, resultant to alcohols, and resultant to methyl tertiary butyl ether and amines and the like.

The above chemical stoppers and packaging films for chemicals have excellent chemical resistance to acids and the like. The above chemical solution transfer members also include corrosionproof tapes wound on chemical plant pipes.

The above formed articles also include vehicular radiator tanks, chemical solution tanks, bellows, spacers, rollers and gasoline tanks, waste solution transport containers, high-temperature liquid transport containers and fishery and fish farming tanks.

The above formed articles further include members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Due to that the formed articles containing the copolymer of the present disclosure have a small haze value, have excellent 90°C abrasion resistance, air low permeability, chemical solution low permeability and 100°C mechanical strength, also have sufficient water vapor low permeability, hardly make fluorine ions to dissolve out in an electrolytic solution, the formed articles can suitably be utilized as a nut, a bolt, a joint, a packing, a valve, a cock, a connector, a filter housing, a filter cage, a flow meter, a pump, or the like. Due to that the filter housing containing the copolymer of the present disclosure has an extremely small haze value, the filter housing has excellent inside-visibility, and, for example, a defoaming operation can be easily performed. Also, the filter housing can suitably be utilized as a piping member (in particular, a joint) used to transfer a chemical solution or as a flow meter body having a flow path for a chemical solution in a flow meter. The piping member and the flowmeter body of the present disclosure have an extremely small haze value, have excellent 90°C abrasion resistance, air low permeability, chemical solution low permeability and 100°C mechanical strength, also have sufficient water vapor low permeability, and hardly make fluorine ions to dissolve out in an electrolytic solution. Accordingly, the piping member and the flowmeter body of the present disclosure have excellent inside-visibility and, especially in the flowmeter body, enables the float inside to be easily observed by visual observation or a camera and the like and can suitably be used in measuring the flow rate of a chemical solution at approximately 100°C. Moreover, the piping member and the flowmeter body of the present disclosure do not corrode a metal mold to be used for forming, can be produced at an extremely high injection rate even when having a thin portion, and has an attractive appearance.

Due to that the formed articles containing the copolymer of the present disclosure do not corrode a metal mold, can be produced at an extremely high injection rate by injection molding even when having a thin portion, have a small haze value, have excellent 90°C abrasion resistance, air low permeability, chemical solution low permeability and 100°C mechanical strength, also have sufficient water vapor low permeability, hardly make fluorine ions to dissolve out in an electrolytic solution, the formed articles can suitably be used as members to be compressed such as gaskets or packings. The gasket or packing of the present disclosure can be inexpensively produced by injection molding without corroding a metal mold, is hardly damaged even when installed in a place where opening and closing are repeated highly frequently, and has excellent 90°C abrasion resistance, air low permeability, chemical solution low permeability and 100°C mechanical strength. Due to that the members to be compressed of the present disclosure have excellent water vapor low permeability, the members can suitably be used as a piping member for transferring a chemical solution that should not be mixed with water such as water vapor in outside air.

The size and shape of the members to be compressed of the present disclosure may suitably be set according to the applications, and are not limited. The shape of the members to be compressed of the present disclosure may be, for example, annular. The members to be compressed of the present disclosure may also have, in plan view, a circular shape, an elliptic shape, a corner-rounded square or the like, and may be a shape having a throughhole in the central portion thereof.

It is preferable that the members to be compressed of the present disclosure are used as members constituting non-aqueous electrolyte batteries. Due to that the members to be compressed of the present disclosure hardly make fluorine ions to dissolve out in an electrolytic solution, the members are especially suitable as members used in a state of contacting with a non-aqueous electrolyte in the non-aqueous electrolyte batteries. That is, the members to be compressed of the present disclosure may also ones having a liquid-contact surface with a non-aqueous electrolyte in the non-aqueous electrolyte batteries.

The members to be compressed of the present disclosure hardly make fluorine ions to dissolve out in non-aqueous electrolytes. Therefore, by using the members to be compressed of the present disclosure, the rise in the fluorine ion concentration in the non-aqueous electrolytes can be suppressed. Consequently, by using the members to be compressed of the present disclosure, the generation of gases such as HF in the non-aqueous electrolytes can be suppressed, and the deterioration and the shortening of the service life of the battery performance of the non-aqueous electrolyte batteries can be suppressed.

From the viewpoint that the members to be compressed of the present disclosure can more suppress the generation of gases such as HF in non-aqueous electrolytes, and can more suppress the deterioration and the shortening of the service life of the battery performance of non-aqueous electrolyte batteries, the amount of fluorine ions dissolving out to be detected in an electrolytic solution immersion test is, in terms of mass, preferably 1.0 ppm or smaller, more preferably 0.8 ppm or smaller, and still more preferably 0.7 ppm or smaller. The electrolytic solution immersion test can be carried out by preparing a test piece having a weight corresponding to 10 sheets of a formed article (15 mm $\times$ 15 mm $\times$ 0.2 mm) using a member to be compressed, and putting a glass-made sample bottle in which the test piece and 2 g of dimethyl carbonate (DMC) have been charged in a thermostatic chamber at 80°C and allowing the sample bottle to stand for 144 hours.

The members to be compressed of the present disclosure hardly make water vapor to penetrate. Therefore, by using the members to be compressed of the present disclosure, the permeation of water vapor from the outside to secondary batteries can be suppressed. Consequently, by using the member to be compressed of the present disclosure, the deterioration of the battery performance and the shortening of the service life of the non-aqueous electrolyte batteries can be suppressed.

The water vapor permeability of the members to be compressed of the present disclosure is, from the viewpoint that the deterioration and the shortening of the service life of the battery performance of the non-aqueous electrolyte batteries can be more suppressed, preferably 14.5 g·cm/m$^2$ or lower, and more preferably 14.2 g·cm/m$^2$ or lower. The water vapor permeability of the members to be compressed can be measured under the condition of a temperature of 95°C and for 30 days.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

For the non-aqueous electrolyte, one or two or more of well-known solvents can be used such as propylene carbonate, ethylene carbonate, butylene carbonate, γ-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, and may be $LiClO_4$, $LiAsF_6$, $LiPF_6$, $LiBF_4$, LiCl, LiBr, $CH_3SO_3Li$, $CF_3SO_3Li$, cesium carbonate and the like.

The member to be compressed of the present disclosure can be suitably utilized, for example, as sealing members such as sealing gaskets or sealing packings, and insulating members such as insulating gaskets and insulating packings. The sealing members are members to be used for preventing leakage of a liquid or a gas, or penetration of a liquid or a gas from the outside. The insulating members are members to be used for insulating electricity. The members to be compressed of the present disclosure may also be members to be used for the purpose of both of sealing and insulation.

The members to be compressed of the present disclosure, due to containing the above copolymer, have the excellent insulating property. Therefore, in the case of using the members to be compressed of the present disclosure as insulating members, the members firmly adhere to two or more electrically conductive members and prevent short circuit over a long term.

The copolymer of the present disclosure hardly corrodes a core wire to be coated. Moreover, by forming the copolymer of the present disclosure by extrusion forming, a thin coating layer can be formed on a core wire having a small diameter at a high take-over speed without discontinuity of the coating even when the diameter of the core wire is small, also a coating layer having excellent electric property can be formed, and thus the copolymer of the present disclosure can be utilized as a material for forming an electric wire coating. Accordingly, a coated electric wire provided with a coating layer containing the copolymer of the present disclosure also has excellent electric property because the coated electric wire barely has defects that causes sparks even when the diameter of the core wire is small and the coating layer is thin.

The coated electric wire has a core wire, and the coating layer installed on the periphery of the core wire and containing the copolymer of the present disclosure. For example, an extrusion formed article made by melt extruding the copolymer of the present disclosure on a core wire can be made into the coating layer. The coated electric wires are suitable to LAN cables (Ethernet cables), high-frequency transmission cables, flat cables, heat-resistant cables and the like, and among these, suitable to transmission cables such as LAN cables (Ethernet cables) and high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferably 2 mm or smaller.

With regard to specific examples of the core wire, for example, AWG (American Wire Gauge)-46 (solid copper wire of 40 $\mu$m in diameter), AWG-26 (solid copper wire of 404 $\mu$m in diameter), AWG-24 (solid copper wire of 510 $\mu$m in diameter), and AWG-22 (solid copper wire of 635 $\mu$m in diameter) may be used.

The coating layer is preferably one having a thickness of 0.1 to 3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, and is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, but is, for example, preferably 60 $\mu$m or smaller, more preferably 45 $\mu$m or smaller, still more preferably 35 $\mu$m or smaller, further still more preferably 30 $\mu$m or smaller, especially preferably 25 $\mu$m or smaller and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell by image processing and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) $\times$ 100. The foaming ratio can be suitably regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a molten state on the core wire to thereby form the coating layer.

In formation of a coating layer, by heating the copolymer and introducing a gas in the copolymer in a molten state, the coating layer containing cells can be formed. As the gas, there can be used, for example, a gas such as chlorodifluoromethane, nitrogen or carbon dioxide, or a mixture thereof. The gas may be introduced as a pressurized gas in the heated copolymer, or may be generated by mingling a chemical foaming agent in the copolymer. The gas dissolves in the copolymer in a molten state.

The copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that good electric property is provided. The printed wiring boards are not limited, but examples thereof include printed wiring boards of electronic circuits for cell phones, various computers, communication devices and the like. As the formed article (2), antenna covers are preferable in that the dielectric loss is low.

By forming the copolymer of the present disclosure by injection molding at a high injection rate, a thin visually attractive sheet can be obtained in a high productivity. In addition, the formed article containing the copolymer of the present disclosure has a small haze value, has excellent 90°C abrasion resistance, air low permeability (gas barrier property), chemical solution low permeability and 100°C mechanical strength, also has sufficient water vapor low permeability, and hardly makes fluorine ions to dissolve out in an electrolytic solution. Accordingly, the formed article containing the copolymer of the present disclosure can be suitably utilized as a film or a sheet.

The film of the present disclosure is useful as release films. The release films can be produced by forming the copolymer of the present disclosure by melt extrusion, calendering, press molding, casting or the like. From the viewpoint that uniform thin films can be obtained, the release films can be produced by melt extrusion forming.

The film of the present disclosure can be applied to the surface of a roll used in OA devices. The copolymer of the present disclosure is formed into required shapes, such as sheets, films or tubes, by extrusion forming, compression molding, press molding or the like, and can be used as surface materials of OA device rolls, OA device belts and the like. Thin-wall tubes and films can be produced particularly by melt extrusion forming.

Due to that the formed article containing the copolymer of the present disclosure has an extremely small haze value, has excellent 90°C abrasion resistance, air low permeability, chemical solution low permeability and 100°C mechanical strength, also has sufficient water vapor low permeability, hardly makes fluorine ions to dissolve out in an electrolytic solution, the formed article can suitably be utilized as a bottle or a tube. The bottle or the tube of the present disclosure enables the contents to be easily viewed, and is hardly damaged during use.

So far, embodiments have been described, but it is to be understood that various changes and modifications of patterns and details may be made without departing from the subject matter and the scope of the claims.

EXAMPLES

The embodiments of the present disclosure will now be described by way of Examples as follows, but the present disclosure is not limited only to these Examples.

Each numerical value in Examples was measured by the following methods.

(Content of a monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle having an inner diameter of 2.1 mm and a length of 8 mm at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

Pellets of the copolymer was formed by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that is completely fluorinated and has no functional groups is obtained. From an absorption peak of a specific functional group observed on this difference spectrum, the number N of the functional group per $1\times10^6$ carbon atoms in the sample was calculated according to the following formula (A).

$$N = I \times K/t \cdots (A)$$

I:     absorbance
K:     correction factor
t:     thickness of film (mm)

For reference, the absorption frequency, the molar absorption coefficient and the correction factor for the functional group in the present disclosure are shown in Table 2. The molar absorption coefficients are those determined from FT-IR measurement data of low molecular model compounds.

[Table 2]

Table 2

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step, at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corporation); and the melting point was determined from a melting curve peak observed in the second temperature raising step.

Example 1

49.0 L of pure water was charged in a 174 L-volume autoclave; nitrogen replacement was sufficiently carried out; thereafter, 40.7 kg of perfluorocyclobutane, 2.58 kg of perfluoro(propyl vinyl ether) (PPVE) and 2.24 kg of methanol were charged; and the temperature in the system was held at 35°C and the stirring speed was held at 200 rpm. Then, tetrafluoroethylene (TFE) was introduced under pressure up to 0.64 MPa, and thereafter 0.041 kg of a 50% methanol solution of di-n-propyl peroxydicarbonate was charged to initiate polymerization. Since the pressure in the system decreased along with the progress of the polymerization, TFE was continuously supplied to make the pressure constant, and 0.071 kg of PPVE was added for every 1 kg of TFE supplied and the polymerization was continued for 19 hours. TFE was released to return the pressure in the autoclave to the atmospheric pressure, and thereafter, an obtained reaction product was washed with water and dried to thereby obtain 30 kg of a powder.

The obtain powder was melt extruded at 360°C by a screw extruder (trade name: PCM46, manufactured by Ikegai Corp) to thereby obtain pellets of a TFE/PPVE copolymer. The PPVE content of the obtained pellets was measured by the method described above. The results are shown in Table 3.

The obtained pellets were put in a vacuum vibration-type reactor VVD-30 (manufactured by OKAWARA MFG. CO., LTD.), and heated to 210°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 210°C for 10 hours. After the reaction was finished, the reactor interior was replaced sufficiently by $N_2$ gas to finish the fluorination reaction. By using the fluorinated pellets, the above physical properties were measured by the methods described above. The results are shown in Table 3.

Example 2

Fluorinated pellets were obtained as in Example 1, except for changing the charged amount of PPVE to 2.69 kg, changing the charged amount of methanol to 2.60 kg, adding 0.073 kg of PPVE for every 1 kg of TFE supplied, and changing the polymerization time to 19.5 hours. The results are shown in Table 3.

Example 3

Fluorinated pellets were obtained as in Example 1, except for changing the charged amount of PPVE to 2.81 kg, changing the charged amount of methanol to 2.83 kg, adding 0.075 kg of PPVE for every 1 kg of TFE supplied, and changing the polymerization time to 19.5 hours. The results are shown in Table 3.

Example 4

Fluorinated pellets were obtained as in Example 1, except for changing the charged amount of PPVE to 2.92 kg, changing the charged amount of methanol to 3.25 kg, adding 0.078 kg of PPVE for every 1 kg of TFE supplied, and changing the polymerization time to 19.5 hours. The results are shown in Table 3.

Example 5

Fluorinated pellets were obtained as in Example 1, except for changing the amount of pure water to 34.0 L, perfluorocyclobutane to 30.4 kg, PPVE to 1.62 kg, and methanol to 0.10 kg, introducing TFE under pressure up to 0.60 MPa, adding 0.060 kg of a 50% methanol solution of di-n-propyl peroxydicarbonate, adding 0.080 kg of PPVE for every 1 kg of TFE supplied, changing the polymerization time to 26.5 hours, changing the heating temperature of the vacuum vibration-type reactor to 170°C, and changing the reaction condition to 170°C and 5 hours. The results are shown in Table 3.

Comparative Example 1

Fluorinated pellets were obtained as in Example 1, except for changing the charged amount of PPVE to 2.29 kg, changing the charged amount of methanol to 3.30 kg, and adding 0.065 kg of PPVE for every 1 kg of TFE supplied. The results are shown in Table 3.

Comparative Example 2

Fluorinated pellets were obtained as in Example 1, except for changing the amount of pure water to 34.0 L, perfluorocyclobutane to 30.4 kg, PPVE to 1.51 kg, and methanol to 2.91 kg, introducing TFE under pressure up to 0.60 MPa, adding 0.060 kg of a 50% methanol solution of di-n-propyl peroxydicarbonate, adding 0.075 kg of PPVE for every 1 kg of TFE supplied, and changing the polymerization time to 27 hours. The results are shown in Table 3.

Comparative Example 3

Fluorinated pellets were obtained as in Example 1, except for changing the charged amount of methanol to 1.75 kg and the polymerization time to 18.5 hours. The results are shown in Table 3.

Comparative Example 4

51.8 L of pure water was charged in a 174 L-volume autoclave; nitrogen replacement was sufficiently carried out; thereafter, 40.9 kg of perfluorocyclobutane, 3.65 kg of perfluoro(propyl vinyl ether) (PPVE) and 2.33 kg of methanol were charged; and the temperature in the system was held at 35°C and the stirring speed was held at 200 rpm. Then, tetrafluoroethylene (TFE) was introduced under pressure up to 0.64 MPa, and thereafter 0.051 kg of a 50% methanol solution of di-n-propyl peroxydicarbonate was charged to initiate polymerization. Since the pressure in the system decreased along with the progress of the polymerization, TFE was continuously supplied to make the pressure constant, and 0.074 kg of PPVE was additionally charged for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 43.9 kg of a powder.

The obtained powder was melt extruded at 360°C by a screw extruder (trade name: PCM46, manufactured by Ikegai Corp) to thereby obtain pellets of a TFE/PPVE copolymer. The obtained pellets were used to perform various measurements by the methods described above. The results are shown in Table 3.

[Table 3]

Table 3

|  | PPVE content (mol%) | MFR (g/10 min) | Number of functional groups (groups/C10$^6$) | Melting point (°C) |
|---|---|---|---|---|
| Example 1 | 2.59 | 20.0 | <6 | 299 |
| Example 2 | 2.67 | 22.0 | <6 | 298 |
| Example 3 | 2.75 | 24.0 | <6 | 296 |
| Example 4 | 2.84 | 27.0 | <6 | 295 |
| Example 5 | 2.92 | 30.0 | 27 | 294 |
| Comparative Example 1 | 2.38 | 25.0 | <6 | 302 |
| Comparative Example 2 | 2.75 | 72.8 | <6 | 296 |
| Comparative Example 3 | 2.59 | 17.3 | <6 | 299 |
| Comparative Example 4 | 2.71 | 23.5 | 280 | 297 |

The description "<6" in Table 3 means that the number of functional groups is less than 6.

Then, by using the obtained pellets, the following properties were evaluated. The results are shown in Table 4.

(Haze value)

By using the pellets and a heat press molding machine, a sheet of approximately 1.0 mm in thickness was prepared. The sheet was immersed in a quartz cell filled with pure water, and the haze value was measured according to JIS K 7136 using a haze meter (trade name: NDH 7000SP, manufactured by NIPPON DENSHOKU INDUSTRIES CO, LTD.).

(Tensile strength (TS) at 100°C)

The tensile strength at 100°C was measured according to ASTM D638.

(Water vapor permeability)

By using the pellets and a heat press molding machine, a sheet-shape test piece of approximately 0.2 mm in thickness was prepared. 18 g of water was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with the water, and held at a temperature of 95°C for 30 days, and thereafter, the test cup was taken out and allowed to stand at room temperature for 2 hours; thereafter, the amount of the mass lost was measured. The water vapor permeability (g·cm/m$^2$) was determined by the following formula.

$$\text{Water vapor permeability } (g \cdot cm/m^2) = \text{the amount of the}$$
$$\text{mass lost } (g) \times \text{the thickness of the sheet-shape test piece } (cm)$$
$$/ \text{ the permeation area } (m^2)$$

(Injection moldability)

· Conditions

The copolymer was injection-molded by using an injection molding machine (SE50EV-A, manufactured by Sumitomo Heavy Industries, Ltd.) set at a cylinder temperature of 390°C, a metal mold temperature of 220°C, and an injection rate of 100 mm/s. A metal mold (4 cavities of 15 mm × 15 mm × 1 mmt, side gate) obtained by Cr-plated HPM38 was used. The obtained four injection molded articles were observed and evaluated according to the following criteria. The presence/absence of surface roughness was checked by touching the surface of the injection molded articles.

3: The entire surface of the four injection molded articles was smooth.
2: In one of the four molded articles, roughness was confirmed on the surface within the region of 1 cm of the portion where the gate of the metal mold was positioned.
1: In two to four of the four molded articles, roughness was confirmed on the surface within the region of 1 cm of the portion where the gate of the metal mold was positioned.
0: Roughness was observed on the entire surface of the four injection molded articles.

In Comparative Example 2, burrs were observed on the injection molded article, and it was not possible to directly use it as a formed article.

(Electrolytic solution immersion test)

Approximately 5 g of the pellets was charged in a metal mold (inner diameter: 120 mm, height: 38 mm), and melted by hot plate press at 370°C for 20 min, thereafter, water-cooled with a pressure of 1 MPa (resin pressure) to thereby prepare a formed article of approximately 0.2 mm in thickness. Thereafter, by using the obtained formed article, test pieces of 15-mm square were prepared.
10 sheets of the obtained test pieces and 2 g of dimethyl carbonate (DMC) were put in a 20-mL glass sample bottle, and the cap of the sample bottle was closed. The sample bottle was put in a thermostatic chamber at 80°C, and allowed to stand for 144 hours to thereby immerse the test pieces in DMC. Thereafter, the sample bottle was taken out from the thermostatic chamber, and cooled to room temperature; then, the test pieces were taken out from the sample bottle. DMC remaining after the test pieces were taken out was allowed to be air-dried in the sample bottle put in a room controlled to be a temperature of 25°C for 24 hours; and 2 g of ultrapure water was added. The obtained aqueous solution was transferred to a measuring cell of an ion chromatograph system; and the amount of fluorine ions in the aqueous solution was measured by an ion chromatograph system (manufactured by Thermo Fisher Scientific Inc., Dionex ICS-2100).

(Metal mold corrosion test)

20 g of the pellets was put in a glass container (50-ml screw vial); and a metal post (5-mm square shape, length of 30 mm) formed of HPM38 (Cr-plated) or HPM38 (Ni-plated) was hung in the glass container so as not to be in contact with the pellets. Then, the glass container was covered with a lid made of an aluminum foil. The glass container was put in an oven as is and heated at 380°C for 3 hours. Thereafter, the heated glass container was taken out from the oven, and cooled to room temperature; and the degree of corrosion of the surface of the metal post was visually observed. The degree of corrosion was judged based on the following criteria.

Good: no corrosion observed
Fair: corrosion slightly observed
Poor: corrosion observed

(Core wire corrosion test)

Extrusion coating in the following coating thickness was carried out on a copper conductor of 0.812 mm in conductor diameter by a 30-mmφ electric wire coating forming machine (manufactured by Tanabe Plastics Machinery Co., Ltd.), to thereby obtain a coated electric wire. The extrusion conditions for the electric wire coating were as follows.

    a) Core conductor: mild steel wire of 0.812 mm in conductor diameter (AWG20)
    b) Coating thickness: 0.9 mm
    c) Coated electric wire diameter: 2.6 mm
    d) Electric wire take-over speed: 3 m/min
    e) Extrusion condition:

```
      · Cylinder screw diameter = 30 mm, a single screw extruder

 of L/D = 22

       · Die (inner diameter)/tip (outer diameter) = 26.0 mm/8.0

    mm
```

Set temperature of the extruder: barrel section C-1 (330°C), barrel section C-2 (350°C), barrel section C-3 (370°C), head section H (380°C), die section D-1 (380°C), die section D-2 (380°C). Set temperature for preheating core wire: 80°C

The coated electric wire formed under the above forming conditions was cut into 20 cm in length, and allowed to stand in a thermohygrostatic chamber (Junior SD-01, manufactured by Formosa Advanced Technologies Co., Ltd.) at 60°C at a humidity of 95% for 2 weeks, then the coating layer was removed to expose the conductor, and the surface of the conductor was visually observed and evaluated according to the following criteria.

    Good: no corrosion observed
    Poor: corrosion observed

(Coating discontinuity and spark)

Extrusion coating in the following coating thickness was carried out on a copper conductor of 0.50 mm in conductor diameter by a 30-mmφ electric wire coating forming machine (manufactured by Tanabe Plastics Machinery Co., Ltd.), to thereby obtain a coated electric wire. The extrusion conditions for the electric wire coating were as follows.

    a) Core conductor: 0.50 mm in conductor diameter
    b) Coating thickness: 0.15 mm
    c) Coated electric wire diameter: 0.80 mm
    d) Electric wire take-over speed: 150 m/min
    e) Extrusion condition:

```
      · Cylinder screw diameter = 30 mm, a single screw extruder

 of L/D = 22

       · Die (inner diameter)/tip (outer diameter) = 8.0 mm/5.0 mm
```

Set temperature of extruder: barrel section C-1 (330°C), barrel section C-2 (360°C), barrel section C-3 (375°C), head section H (390°C), die section D-1 (405°C), die section D-2 (395°C). Set temperature for preheating core wire: 80°C

(Spark)

A spark tester (DENSOK HIGH FREQ SPARK TESTER) was installed online on an electric wire coating line, and the presence/absence of defects of the electric wire coating was evaluated at a voltage of 1,500 V. The case where no spark was generated in 1-hour continuous forming was determined as passing (Good), and the case where a spark was detected therein was determined as rejected (Poor).

(Coating discontinuity)

Electric wire coating forming was continuously carried out; and the case where coating discontinuity occurred once or more in 1 hour was determined as poor (Poor) in continuous forming, and the case where no coating discontinuity occurred was determined as fair (Good) in continuous forming.

(Abrasion test)

By using the pellets and a heat press molding machine, a sheet-shape test piece of approximately 0.2 mm in thickness, and a test piece having 10 cm × 10 cm was cut out therefrom. The prepared test piece was fixed to a test bench of a Taber abrasion tester (No. 101 Taber type abrasion tester with an option, manufactured by YASUDA SEIKI SEISAKUSHO, LTD.), and the abrasion test was carried out using the Taber abrasion tester under conditions of a test piece surface temperature of 90°C, a load of 500 g, an abrasion wheel CS-10 (rotationally polished in 20 rotations with an abrasive paper #240), and a rotational speed of 60 rpm. The weight of the test piece after 1,000 rotations was measured, and the same test piece was further subjected to the test of 3,000 rotations, and then the weight of the test piece was measured. The abrasion loss was determined by the following formula.

$$\texttt{Abrasion loss (mg) = M1 - M2}$$

M1: the weight of the test piece after the 1,000 rotations (mg)
M2: the weight of the test piece after 3,000 rotations (mg)

(Air permeability coefficient)

By using the pellets and a heat press molding machine, a sheet-shape test piece of approximately 0.1 mm in thickness. Using the obtained test piece, air permeability was measured with a differential pressure type gas permeation meter (L100-5000 gas permeability meter, manufactured by Systech Illinois) according to the method described in JIS K7126-1:2006. The air permeability value at a permeation area of 50.24 $cm^2$ at a test temperature of 70°C at a test humidity of 0% RH was obtained. The obtained air permeability and the test piece thickness were used to calculate the air permeability coefficient from the following equation.

$$\texttt{Air permeability coefficient } (cm^3 \cdot mm/(m^2 \cdot 24 \ h \cdot atm)) =$$

$$\texttt{GTR} \times \texttt{d}$$

GTR: air permeability ($cm^3/(m^2 \cdot 24 \ h \cdot atm)$)
d: test piece thickness (mm)

(Electrolytic solution permeability)

By using the pellets and a heat press molding machine, a sheet-shape test piece of approximately 0.2 mm in thickness was prepared. 10 g of dimethyl carbonate (DMC) was put in a test cup (permeation area: 12.56 $cm^2$), and the test cup was covered with the sheet-shape test piece; and a PTFE gasket was pinched and fastened to hermetically close the test cup. The sheet-shape test piece was brought into contact with the DMC, and held at a temperature of 60°C for 30 days, and thereafter, the test cup was taken out and allowed to stand at room temperature for 1 hour; thereafter, the amount of the mass lost was measured. The DMC permeability ($g \cdot cm/m^2$) was determined by the following formula.

$$\text{Electrolytic solution permeability } (g \cdot cm/m^2) = \text{the}$$

$$\text{amount of the mass lost } (g) \times \text{the thickness of the sheet-shape}$$

$$\text{test piece } (cm) \text{ / the permeation area } (m^2)$$

(Dielectric loss tangent)

By melt forming the pellets, a cylindrical test piece of 2 mm in diameter was prepared. The prepared test piece was set in a cavity resonator for 6 GHz, manufactured by Kanto Electronic Application and Development Inc., and the dielectric loss tangent was measured by a network analyzer, manufactured by Agilent Technologies Inc. By analyzing the measurement result by analysis software "CPMA", manufactured by Kanto Electronic Application and Development Inc., on PC connected to the network analyzer, the dielectric loss tangent (tan6) at 20°C at 6 GHz was determined.

[Table 4]

Table 4

| | Haze value | 100°C Tensile strength | Water vapor permeability | Injection moldability | Electrolytic solution immersion test | Metal mold corrosion test | | Electric wire coating property | | | 90°C Abrasion loss | Air permeability coefficient | Electrolytic solution permeability | Dielectric loss tangent |
| | | | | | Amount of fluorine ions dissolving out (ppm by mass) | HPM38 (Cr-plated) | HPM38 (Ni-plated) | Core wire corrosion test | Coating discontinuity | Spark | | cm$^3$·mm / (m$^2$·24h·atm) | | |
| | (%) | (MPa) | (g·cm/m$^2$) | | | | | | | | (mg) | | (g·cm/m$^2$) | |
| Example 1 | 8.9 | 18.5 | 14.2 | 1 | 0.6 | Good | Good | Good | Good | Good | 16.8 | 465 | 7.1 | 0.00040 |
| Example 2 | 8.8 | 18.5 | 14.1 | 2 | 0.6 | Good | Good | Good | Good | Good | 16.8 | 470 | 7.1 | 0.00040 |
| Example 3 | 8.7 | 19.0 | 14.1 | 3 | 0.6 | Good | Good | Good | Good | Good | 16.7 | 476 | 7.1 | 0.00041 |
| Example 4 | 8.5 | 18.5 | 14.0 | 3 | 0.6 | Good | Good | Good | Good | Good | 16.7 | 480 | 7.0 | 0.00041 |
| Example 5 | 8.4 | 18.5 | 13.8 | 3 | 0.6 | Good | Good | Good | Good | Good | 16.7 | 487 | 7.1 | 0.00047 |
| Comparative Example 1 | 10.2 | 17.5 | 12.6 | 3 | 0.6 | Good | Good | Good | Good | Good | 19.1 | 430 | 6.8 | 0.00039 |
| Comparative Example 2 | 10.9 | 15.5 | 11.0 | Burr | 0.6 | Good | Good | Good | Good | Good | 25.6 | 417 | 6.1 | 0.00038 |
| Comparative Example 3 | 8.6 | 19.0 | 14.6 | 0 | 0.6 | Good | Good | Good | Poor | Poor | 16.3 | 472 | 7.2 | 0.00041 |
| Comparative Example 4 | 8.8 | 18.0 | 14.0 | 3 | 1.6 | Poor | Poor | Poor | Good | Poor | 16.8 | 521 | 8.1 | 0.00106 |

**Claims**

1. A copolymer, comprising tetrafluoroethylene unit and perfluoro(propyl vinyl ether) unit,

    wherein the copolymer has a content of perfluoro(propyl vinyl ether) unit of 2.51 to 2.92 mol% with respect to the whole of the monomer units,
    a melt flow rate at 372°C of 19.0 to 33.0 g/10 min, and
    the number of functional groups of 50 or less per $10^6$ main-chain carbon atoms.

2. The copolymer according to claim 1, wherein the copolymer has a melt flow rate at 372°C of 20.0 to 30.0 g/10 min.

3. An injection molded article, comprising the copolymer according to claim 1 or 2.

4. A coated electric wire, comprising a coating layer comprising the copolymer according to claim 1 or 2.

5. A formed article, comprising the copolymer according to claim 1 or 2, wherein the formed article is a joint, a flowmeter body, or an electric wire coating.

## INTERNATIONAL SEARCH REPORT

| | International application No. |
|---|---|
| | **PCT/JP2022/003637** |

### A. CLASSIFICATION OF SUBJECT MATTER

*C08F 8/00*(2006.01)i; *C08F 214/26*(2006.01)i; *H01B 7/02*(2006.01)i
FI: C08F8/00; H01B7/02 Z; C08F214/26

According to International Patent Classification (IPC) or to both national classification and IPC

### B. FIELDS SEARCHED

Minimum documentation searched (classification system followed by classification symbols)

C08F6/00-246/00; H01B7/00-7/02; H01B7/38-7/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-214641 A (AGC INC.) 19 December 2019 (2019-12-19)<br>claims 1-10, paragraphs [0017], [0025], [0041], example 10 | 1-5 |
| Y | JP 2009-059690 A (DAIKIN IND., LTD.) 19 March 2009 (2009-03-19)<br>claims 1-8, paragraphs [0016], [0028]-[0030] | 1-5 |
| Y | JP 03-247609 A (E. I. DU PONT DE NEMOURS & CO.) 05 November 1991 (1991-11-05)<br>claims 1-4, page 2, upper left column, line 17 to lower right column, line 12 | 1-5 |
| Y | JP 2018-523272 A (THE CHEMOURS CO. FC, LLC) 16 August 2018 (2018-08-16)<br>claims 13-14, 17, paragraphs [0017], [0046], [0052] | 1-5 |
| Y | JP 2012-106494 A (DAIKIN IND., LTD.) 07 June 2012 (2012-06-07)<br>paragraph [0155] | 1-5 |
| A | JP 2005-320497 A (DAIKIN IND., LTD.) 17 November 2005 (2005-11-17)<br>claims 1-16, examples | 1-5 |
| A | JP 2017-214478 A (DAIKIN IND., LTD.) 07 December 2017 (2017-12-07)<br>claims 1-5, examples | 1-5 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/003637**

**C.    DOCUMENTS CONSIDERED TO BE RELEVANT**

| Category* | Citation of document, with indication, where appropriate, of the relevant passages | Relevant to claim No. |
|---|---|---|
| P, X | JP 2021-141043 A (DAIKIN IND., LTD.) 16 September 2021 (2021-09-16) claims 1-9, paragraph [0044], example 3 | 1-3 |
| P, A | | 4-5 |

Form PCT/ISA/210 (second sheet) (January 2015)

## INTERNATIONAL SEARCH REPORT
### Information on patent family members

International application No.

**PCT/JP2022/003637**

| Patent document cited in search report | | | Publication date (day/month/year) | Patent family member(s) | Publication date (day/month/year) |
|---|---|---|---|---|---|
| JP | 2019-214641 | A | 19 December 2019 | (Family: none) | |
| JP | 2009-059690 | A | 19 March 2009 | US 2009/0038821 A1 claims 1-8, paragraphs [0029], [0041]-[0043] CN 101364456 A KR 10-2009-0015822 A TW 200912963 A | |
| JP | 03-247609 | A | 05 November 1991 | US 4743658 A claims 1-5, column 1, line 41 to column 2, line 23 EP 220910 A2 | |
| JP | 2018-523272 | A | 16 August 2018 | US 2017/0025204 A1 claims 13-14, 17, paragraphs [0017], [0046], [0052] WO 2017/014950 A1 EP 3326179 A1 CN 106448908 A TW 201712694 A KR 10-2018-0033230 A | |
| JP | 2012-106494 | A | 07 June 2012 | TW 201236867 A page 42, line 23 to page 43, line 3 WO 2012/057237 A1 | |
| JP | 2005-320497 | A | 17 November 2005 | (Family: none) | |
| JP | 2017-214478 | A | 07 December 2017 | (Family: none) | |
| JP | 2021-141043 | A | 16 September 2021 | WO 2021/039863 A1 | |

Form PCT/ISA/210 (patent family annex) (January 2015)

**EP 4 299 603 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009059690 A